# EUROPEAN PATENT SPECIFICATION

(11) **EP 0 766 125 B1**
(45) Date of publication and mention of the grant of the patent: **07.05.2003**
(21) Application number: 96306686.5
(22) Date of filing: 16.09.1996
(51) Int. Cl.: G03B 21/10, H04N 5/74

(54) **Cabinet structure of multiscreen display**
Gehäusestruktur einer Mehrschirmanzeigevorrichtung
Structure de boîtiers d'un dispositif d'affichage à plusieurs écrans

(30) Priority: 19.09.1995 JP 24009595
(43) Date of publication of application: 02.04.1997
(73) Proprietor: KABUSHIKI KAISHA TOSHIBA, Kawasaki-shi, Kanagawa-ken 210-8572 (JP)
(72) Inventor: Furuya, Keizo, Fukaya-shi, Saitama-ken, 366 (JP)
(74) Representative: Waldren, Robin Michael

(56) References cited:
- EP-A- 0 650 295
- EP-A- 0 707 422
- DE-U- 8 807 107
- US-A- 5 382 990

## Description

### Background of the Invention

### Field of the Invention:

The present invention relates to a multiscreen displaying apparatus and a cabinet structure of a projector unit used for it.

### Description of the Related Art:

A multiscreen displaying apparatus is a wide screen displaying apparatus formed by vertically and horizontally arranging plural projectors, in which said each projector comprises a screen fixed to a fitting frame placed on the front and a projecting part placed on the back of it.

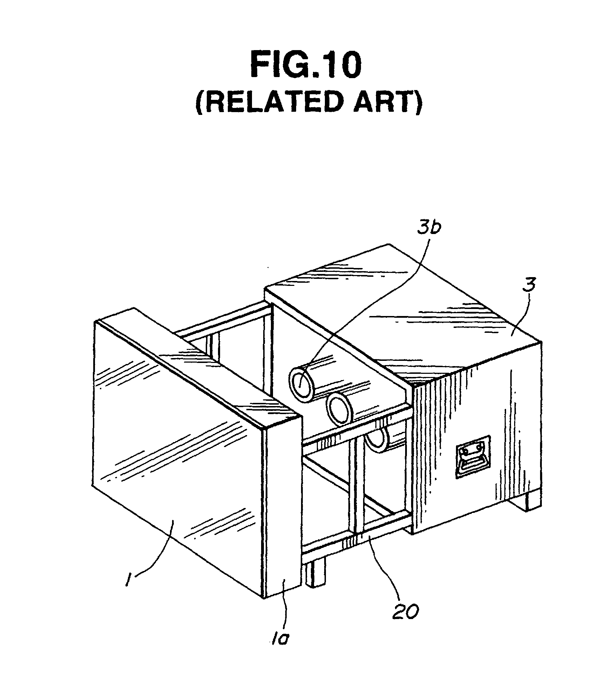

Fig. 10 is a sketch drawing of a cabinet of a projector unit used for a conventional multiscreen display.

As shown in Fig. 10, a screen part (a screen 1 and a fitting frame 1a) and a housing (a projecting part) 3 are connected with a frame 20. A frame structure is employed to lower costs and lighten weight. That is, the structure is made simple by limiting to use of only necessary parts except the screen parts 1, 1a and the projecting part 3. Optical units and electric units for generating enlarged images on the screen 1 are housed in the projecting part 3. Enlarged image light is projected from the projecting part 3 on the back of the screen 1. Fig. 10 shows only lenses 3b of the optical units.

Advantages of this structure are that it is possible to form a light, inexpensive projector units and to obtain a similar effect even if plural projector units are piled up.

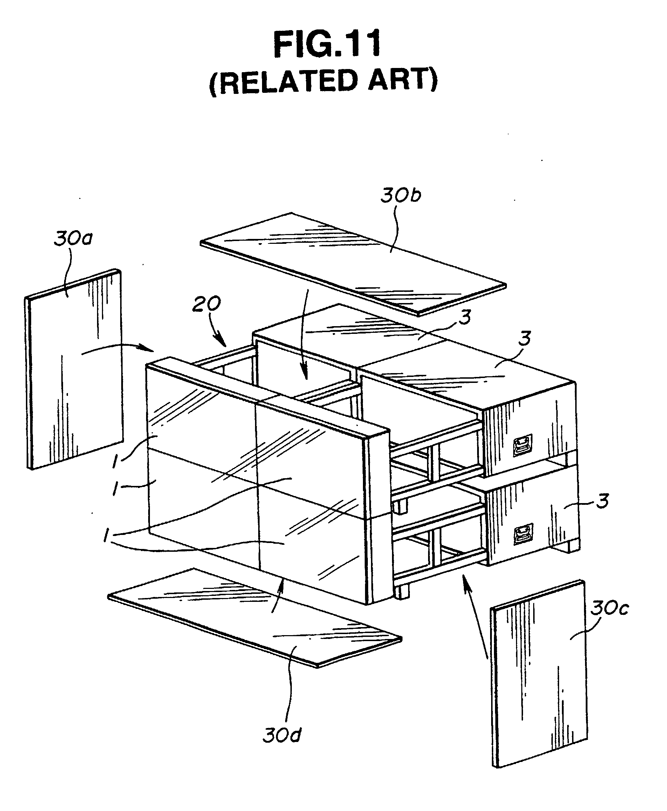

Fig. 11 shows a multiscreen displaying apparatus in which four projector units are arranged

As shown in Fig. 11, in the case of forming a multiscreen by piling up four projector units, it is possible to form a multiscreen by covering the frame parts 20 with outer plates 30a - 30d and by shielding outer light after they are plied up. Therefore, it is not necessary to provide an outer plate to each unit respectively and it is possible to form a light, inexpensive multiscreen. It is needless to say that the more the number of units arranged increases, the fewer the number of outer plates required with respect to the number of units decreases, and the more effective it is.

However, on the contrary to such advantages, there are the following problems.

First, though a lighter and lower-priced multiscreen is formed because of the frame structure, there was a problem of poor space efficiency in transportation and storage because the whole area of the projector unit was large.

Second, as there was no shielding part between the inner and outer parts of the apparatus, if it is left outside for a long time, dust and so on enter from the frame part 20 and adhere to the inside of the screen 1 or to the surface of the lens 3b, causing the problem of degrading the quality of a picture when in use.

European patent application number 650 295 discloses a multiscreen display comprising a number of projectors with a screen part and a rear half cabinet containing the light box. The screen part is moveable in relation the rear half-cabinet and can be fixed in a retracted position for use by a bolt. The rear half cabinet is not removable from the screen part in view of flange shaped stoppers on each component, which abut the components are fully retracted.

European patent application number 707 422 discloses a multiscreen display comprising a number of projectors with a rear cabinet fitted slidably and containably inside a front screen cabinet. An optical unit is placed in the rear cabinet, which is a basket-shaped frame so that much of the optical unit is visible from the outside, when the rear cabinet is extended from the front cabinet.

### Summary of the Invention

An object of the present invention is to provide a cabinet structure of a multiscreen displaying apparatus in which space efficiency in transporting and storing is advanced and dust and the like do not enter from the frame part.

The present invention is defined in claim 1.

According to the structure of the apparatus, it is possible to transport the projector with said projecting part housed in said frame when transporting the projector and to project images from the projecting part on the screen by separating the projecting part from the screen part when projecting images by the projector.

The frame comprises four L-shaped rail members protruded from the back of said screen to said projecting part, and partially covering the edge parts of said projecting part, and a frame member connecting the ends of the L-shaped rail members.

Therefore, it is possible to relatively move said projecting part and said screen part along said rail members.

Furthermore, according to the present invention, said projecting part is also provided with leg parts at the bottom surface of the end part on the side of said screen and at the bottom surface of the end opposite to the screen. Furthermore, said projecting part is provided with leg supports at the upper surface of the end part on the side of said screen of the projecting part and at the upper surface of the end opposite to the screen of the projecting part for stabilization when plural projectors are piled up.

### Brief Description of the Drawings

Fig. 1 is a perspective view showing the cabinet structure of a projector unit of a multiscreen displaying apparatus of an embodiment according to the present invention.
Fig. 2 (a) is a side view showing a projector unit in the case of taking a screen part out of the side of a projecting part.
Fig. 2 (b) is a bottom view showing a projector unit in the case of taking the screen part out of the side of the projecting part
Fig. 3 is a cross section view showing a section taken along the line X-X of Fig. 2 (a).
Fig. 4 is a side view showing a projector unit in the case of pushing the screen part into the side of the projecting part.
Fig. 5 is a side view in which two cabinets of Fig. 1 are piled up.
Fig. 6 is a side view in the case of fixing the cabinet of Fig. 1 to a movable fixing stand.
Fig. 7 is a perspective view showing the cabinet structure of another embodiment according to the present invention.
Fig. 8 is a side view showing a multiscreen displaying apparatus in which two cabinets of the embodiment in Fig. 7 are piled up.
Fig. 9 is a side view in the case of fixing the multiscreen displaying apparatus in Fig. 8 to a movable fixing stand.
Fig. 10 is a perspective view showing a cabinet structure of a conventional multiscreen displaying apparatus.
Fig. 11 is a perspective view showing a condition that the cabinets of Fig. 10 are piled up.

### Detailed Description of the Preferred Embodiments

### Embodiments will be described referring to drawings.

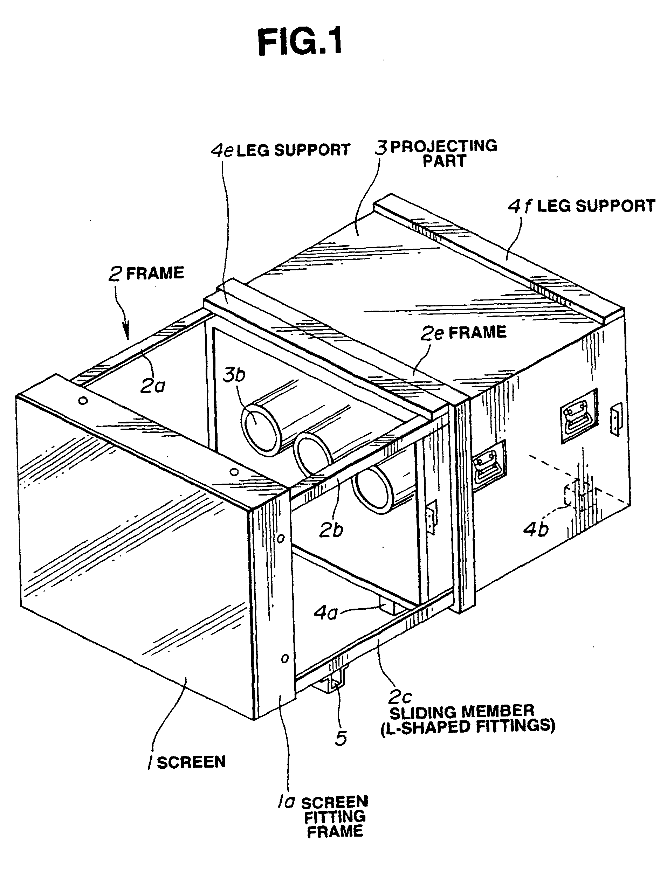

Fig. 1 shows the cabinet structure of a projector unit of a multiscreen displaying apparatus of an embodiment according to the present invention.

The multiscreen displaying apparatus makes possible to display a large screen by vertically and/or horizontally arranging plural projectors. Fig. 1 shows one projector.

As shown in Fig. 1, the projector comprising a screen 1 and a projecting part 3, the screen 1 is held by a screen fitting frame 1a. L-shaped rail metal fittings 2a - 2d as sliding members is fixed to four comers of the fitting frame 1a. Though the L-shaped rail metal fittings 2d is not shown in the perspective view, four L-shaped metal fittings are here used as a set. The screen fitting frame 1a is larger than the outer form of the projecting part 3 on the back, and one ends of L-shaped metal fittings 2a - 2d protruded on the side of the projecting part 3 on the back are fixed respectively in the inner part of the fitting frame 1a. Furthermore, a frame 2e enclosing the outer periphery of the projecting part is provided on the side of the projecting part 3. The other ends of the L-shaped metal fittings 2a - 2d are fixed to the frame 2e. Therefore, it is possible to house the projecting part 3 in a frame comprising these metal fittings 2a - 2d and the frame 2e. The frame 2 can be moved together with the screen 1 in the direction of the projecting part 3.

The projecting part 3 has an optical unit 3b. Furthermore, leg parts 4a - 4d (only 4a and 4b are shown in Fig. 1.) are provided at the bottom in order to make the L-shaped metal fittings 2a - 2d move easily. The leg parts 4a, 4c and 4b, 4d are provided at the bottom on the side of the screen of the projecting part 3 and at the bottom on the side opposite to it and at the positions which are not in contact with said L-shaped metal fittings 2c and 2d. The L-shaped metal fittings 2c and 2d are also provided with a leg part 5 having the same size as that of each of the leg parts 4a - 4d to prevent the screen part from being inclined or falling down when the screen part is pulled out. Furthermore, leg supports 4e and 4f are provided at the upper part of the frame 2e and at the upper part on the back of the projecting part 3.

The frame 2 is set larger than the outer form of the projecting part 3 in the present invention. Therefore, the projecting part 3 is simply formed as a box without useless processing.

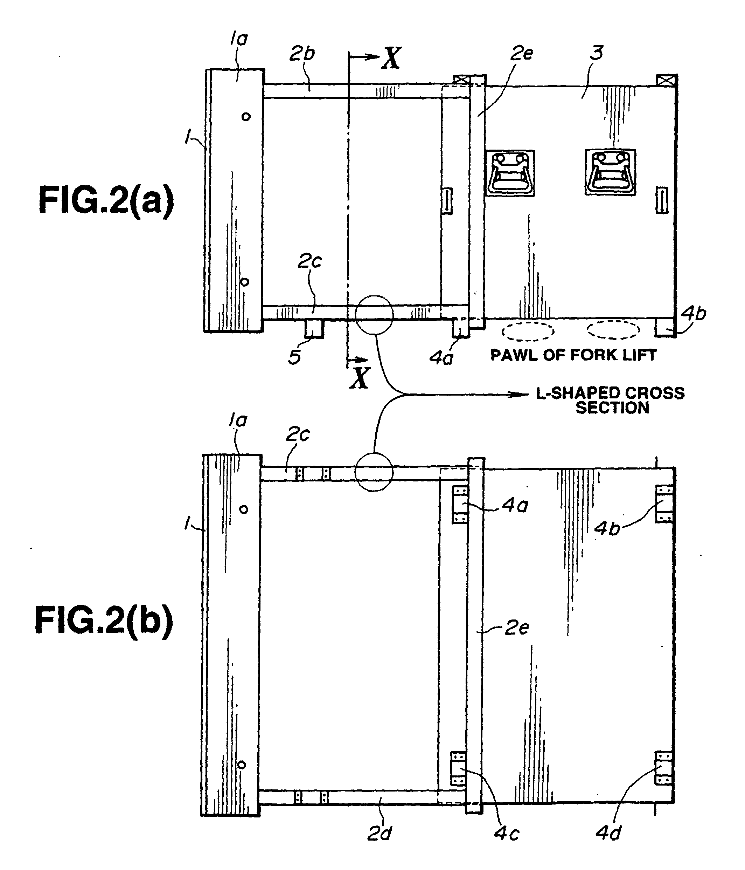

An operation of Fig. 1 will be described referring to Fig. 2. Fig. 2 (a) shows a side view in the case that a screen 1 is pulled out and Fig. 2 (b) shows a bottom view.

It is understood from the side view of Fig. 2 (a) that it is possible to form a small space at the bottoms of the projecting part 3 and the L-shaped metal fittings 2c and 2d due to the leg parts 4a and 4b. Therefore, it is possible to avoid situation that all the bottom parts of the L-shaped metal fittings 2c and 2d are in contact with a floor surface. That is, it is possible to avoid the structure that friction is applied to the floor. In the case of transporting or piling up this cabinet, it will be possible to lift it up easily if the pawls of a fork lift are inserted into the space. The bottom view of Fig. 2 (b) shows the positions of the leg parts 4a - 4d. The leg parts 4a - 4d are, of course, provided at the positions that they are not in contact with the L-shaped metal fittings 2c and 2d and support the projecting parts 3.

Furthermore, as the weight of the projecting part 3 is heavier than that of the screen I in said frame structure, it will be possible to lift it up by the fork lift under the stable condition even if in the case that the screen 1 is pulled out.

As a frame 2 is the outest part under the condition that the screen 1 is pulled out, even if the frame 2 is covered with a blackout curtain, an optical path from the projecting part 3 will not be shielded. That is, it is possible to set up the blackout curtain without being loosened if tension is applied to the blackout curtain so that the outest part is used as a frame. Therefore, such an accident that the upper blackout curtain is loosened to shield the optical path will not occur.

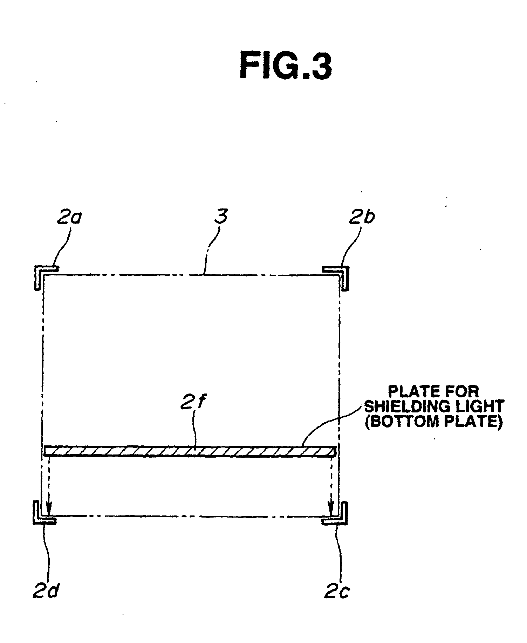

Therefore, it is possible to shield the outer light easily without providing the outer plate of Fig. 10. However, a bottom plate 2f supported by the inner surfaces of the L-shaped metal fittings 2c and 2d is provided at the bottom. This is shown in Fig. 3.

As the L-shaped parts are conveniently formed to be like a receiver of a shelf plate, it is possible to put this bottom plate 2f on the inner surfaces of the L-shaped metal fittings 2c and 2d by the empty weight of the bottom plate 2f only by fitting without fixing with screws. Furthermore, as the gaps are not formed between the adjacent cabinets of the unit displays when the L-shaped metal fittings 2a - 2d are installed the width of which is almost the same as that of the screen fitting frame 1a, it is possible to shield the outer light on the side of the bottom plate completely.

Furthermore, as the L-shaped metal fittings 2a - 2d are positioned at the outest place, it is possible to make a space formed by the four L-shaped metal fittings wide and the operation inside the space possible.

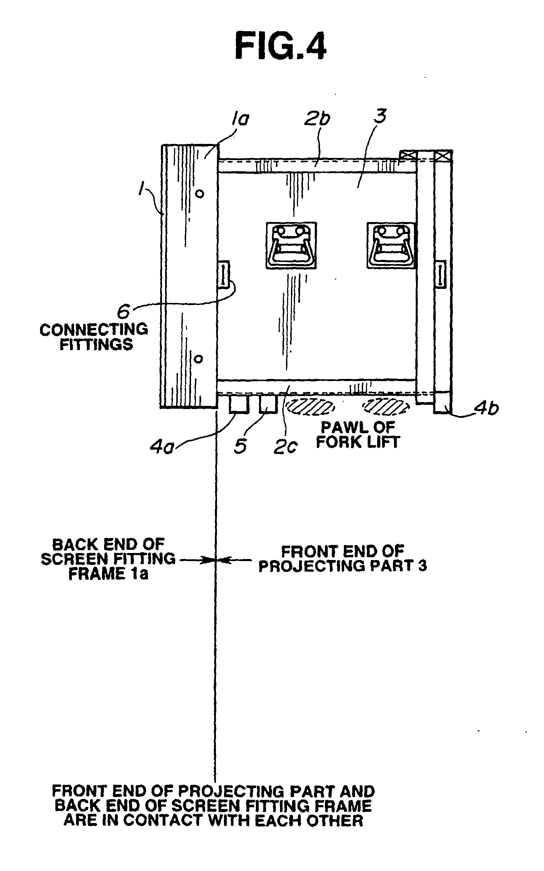

Fig. 4 shows the case of that the screen 1 is pressed into the projecting part 3. As a space is also formed at the bottom in this case, the operation using a folk lift becomes very easy. As it is stored under this condition in transporting, the space efficiency is improved very much. Furthermore, as it is formed so that the projecting part 3 is housed in a frame 2 and, as a whole, one rectangular parallelepipeds is formed, load is not applied concentratedly to the frame 2 even in handling a load. Therefore, it is not worried about that the frame 2 is not broken and it is possible to handle the load safely.

Furthermore, it is possible to fix the rear end of a screen fitting frame 1a and the front end of a projecting part 3 by a joint metal fittings 6 in order to secure a safety in transporting.

Characteristics in the case of piling up units having the cabinet structure according to the present invention or of fixing it to a fixing stand will be described.

Efficiency of operability by a fork lift or the like is improved and it is possible to obtain the following effect.

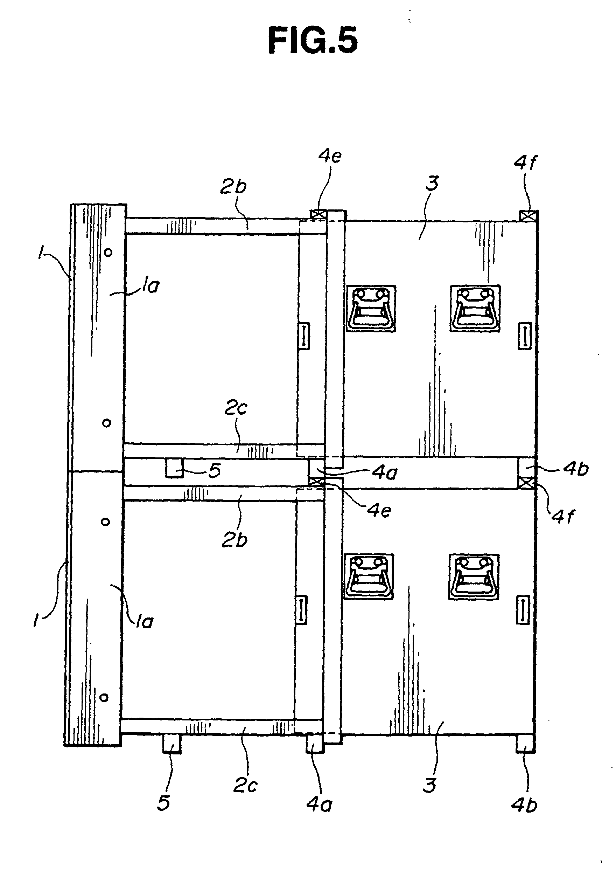

First, the case of piling up units will be described. Fig. 5 is a side view in the case of pulling out the screen 1 and of piling up two units.

As said leg supports 4e and 4f are provided at the positions that are fitted to leg parts 4a - 4d (only the 4a and 4b are shown due to a side view in Fig. 5) as shown in Fig. 5, it is possible to determine the positions of the upper and lower units by putting the leg parts 4a - 4d on the leg supports 4e and 4f. Furthermore, if a joint mechanism to fix the leg parts 4a - 4d and the leg supports 4e and 4f by fittings or the like is provided, it will be possible to connect the upper unit with the lower unit securely.

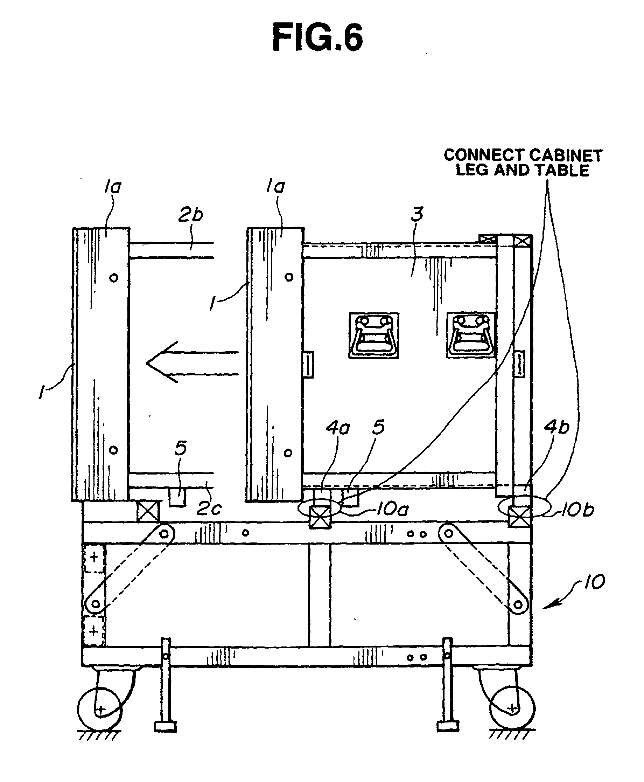

Furthermore, the case of fixing a cabinet according to the present invention to a fixing table 10 will be described referring to Fig. 6.

When putting a projecting part 3 at the predetermined upper position of the movable fixing table 10 and fixing leg parts 4a - 4d to fixing parts 10a - 10d of the table 10, it is possible to easily form a projector for enlargement projection by pulling out the screen 1. Fig. 6 shows only 4a, 4b and 10a, 10b similarly to Fig. 5 due to the side view.

If a concave and convex parts are provided so that the leg parts 4a - 4d are engaged with the fixing parts 10a - 10d of the table 10, it will be possible to fix the projecting part 3 to the table securely, enabling operation to be performed safely.

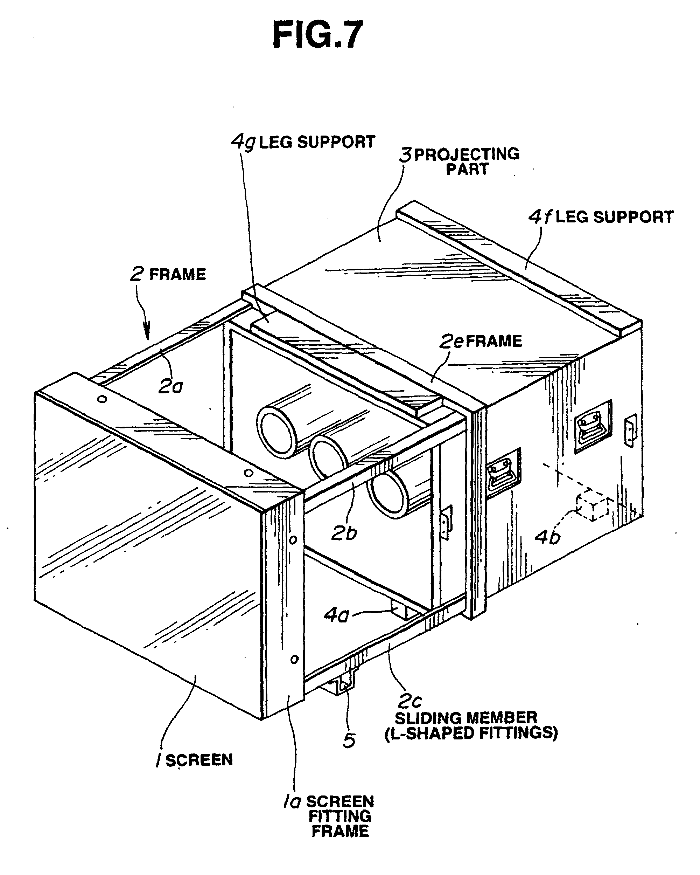

Furthermore, Fig. 7 is a variation. The leg support 4e is provided on the side of the frame in Fig. 1, but the leg support 4g is provided on the side of the projecting part in Fig. 7. As the leg support 4e is provided on the side of the frame in Fig. 1, the projector units should be piled up after screens 1 are pulled up. However, as the leg support 4g is set at the predetermined position from the beginning, it is made possible to pull out the frame after the projector units are piled up.

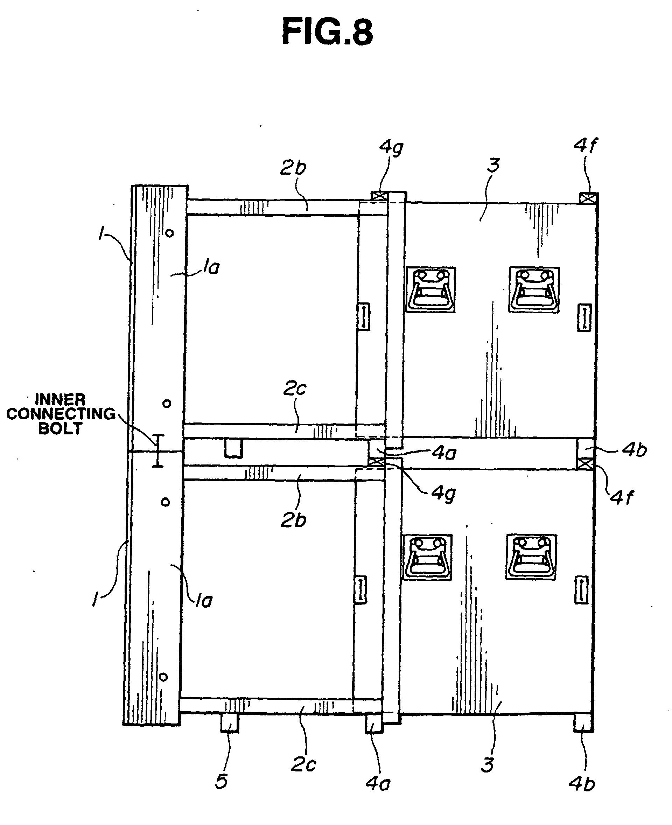

As shown in Fig. 7, the leg support 4g is provided on the upper surface of the projecting part 3 and at the position that is not in contact with the L-shaped metal fittings 2a, 2b. As the leg parts 4a and 4c and the leg support 4g are fixed each other positionally regarding to the upper and lower projector units as shown in Fig. 8 when they are piled up, it is possible to pull out the screen 1 after they are piled up. Therefore, it is also possible to adjust the position of the screen 1.

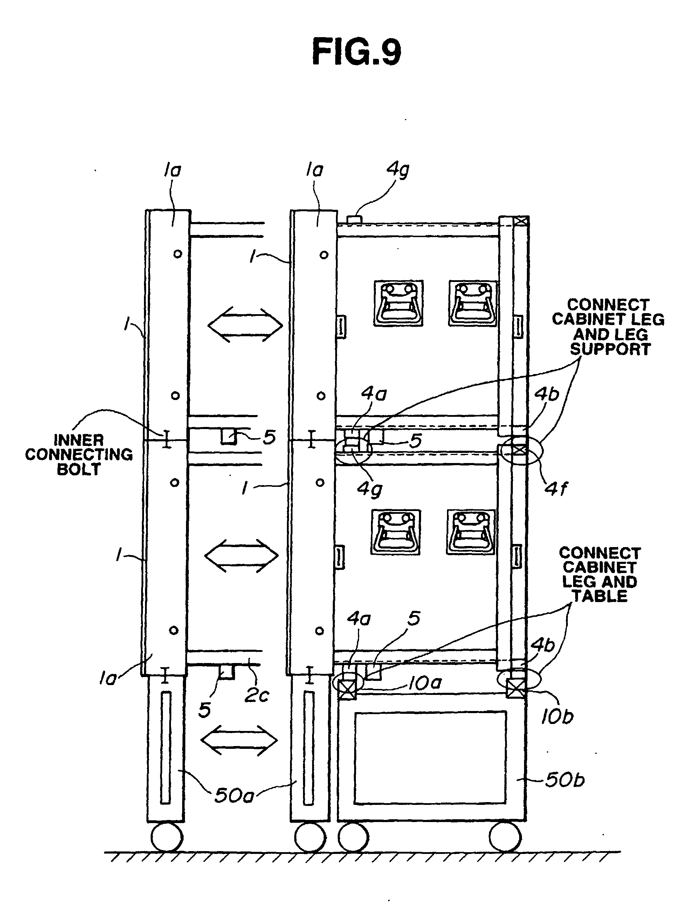

Furthermore, the case of fixing the multiscreen display of Fig. 8 to a fixing table will be described referring to Fig. 9. In Fig. 9, an improvement is shown that a fixing table part is improved by using a characteristic that it is possible to pull out the screens 1 after projector units are piled up. Here, the fixing part is divided into two parts and the screens 1 and the projecting part 3 are put on separate fixing tables 50a and 50b respectively. That is, in order to make pulling-out operation smoothly, a fixing frame 1a of the screen 1 is put on the fixing table 50a with casters to make it move by the caster possible. The projecting part 3 is fixed to a fixing table 50b. To make the projector units piled up move possible, a fixing table 50b on the side of the projecting part is also provided with casters and the projecting part 3 is fixed by a stopper only in the case of pulling them out.

Furthermore, it is also possible to move each screen by the casters at a time by connecting the screen part (a fitting frame 1a) of each unit with a bolt or the like when the projector units are piled up.

As it is natural that it is possible to connect screens not only vertically but also horizontally, it is possible to move each screen by the casters at the same time regardless of the number of screens.

Thus it is possible to previously assemble a multiscreen display comprising four surfaces and to transport it. That is, as the screen part is pressed into the projecting parts 3 in transporting and moving, it becomes very easy to handle.

Furthermore, in the composition of multiscreen, as it is possible to adjust the position of each screen surface only by pulling out the screen fitting frame 1a, it is possible to obtain the proper condition of receiving images at once and to restore the enlarged image very simply.

As it is possible to secure safety of operation for installing the multiscreen display and to put the units on the movable tables, the position of the multiscreen display in a hall for projecting images can be changed easily.

As mentioned above, according to the present invention, by uniting a frame a little larger than the outer form of the projecting part to the screen part and by making only the screen part or the projecting part slidable, the projector units can be made lighter and compact by sliding either of them. Furthermore, as the frame connected with the screen part is a little larger than the outer form of the projecting part, it is possible to shield outer light simply by using the frame as the support of the blackout curtain without providing an outer plate.

Furthermore, when lifting units by the fork lift or the like, it is easy to insert the claw parts, improving operability.

Furthermore, it is possible to set the screen at the predetermined position in projecting. Therefore, it is possible to improve space efficiency in transporting and to enjoy high quality, enlarged images when projecting. Furthermore, if the frame is pressed into the projecting part when stored, it will be possible to prevent dust from entering from the frame part.

Furthermore, as the leg part necessary in piling plural projector units is provided at the lower part of the projecting part and the leg support is provided at the upper part of the projecting part, it is possible to pile up the units with the screen parts pressed into the projecting part and to pull the screen part out of it after they are plied up. Therefore, it is easy to transport and move the units, or perform the operation by the fork lift.

Furthermore, by putting the multiscreen display on a movable table, it becomes easy to move it.

## Claims

1. A multiscreen displaying apparatus comprising a predetermined number of projectors having screen parts (1) and projecting parts (3) projecting images on said screen parts, said screen part (1) being releasably attached to said projecting part (3), comprising:
a frame (2) placed between said screen part (1) and said projecting part (3), said frame united with said screen part (1) and protruded from the back side of said screen part (1) to the side of said projecting part (3), said frame being adapted to house said projecting part (3) in it and larger than the outer periphery of said projecting part (3),
wherein said frame (2) comprises four rail members (2a, 2b, 2c, 2d) which are fixed to the screen part (1), are L-shaped in cross-section and partially cover the edge parts of said projecting part (3); and a frame member (2e) for connecting the ends of the L-shaped rail members protruded to the side of said projecting part (3), and wherein
said screen part (1) is attached retractably to said projecting part (3) so that the screen part (1) can be moved in the direction of the projection part (3) by means of said rail members.

2. A multiscreen displaying apparatus according to claim 1, wherein said projecting part further comprises leg parts (4a, 4b, 4c, 4d) at the bottom of the end part on the side of said screen part and at the bottom of the end opposite to the screen part.

3. A multiscreen displaying apparatus according to claim 2, wherein said projecting part further comprises leg supports (4g, 4f) at the upper surface of the end part on the side of said screen part and at the upper surface of the end opposite to the screen part.

4. A multiscreen displaying apparatus according to claim 1, comprising a connecting means (6) for connecting said projecting part with said screen part when housing said projecting part in said frame.

5. A multiscreen displaying apparatus according to claim 1, comprising connecting means (4a and 4e, 4b and 4f) for connecting the upper projecting parts and the lower projecting parts when piling up said plural projectors.

6. A multiscreen displaying apparatus according to claim 1, comprising a movable fixing table (10) under the lowest projector when piling up said plural projectors.

7. A multiscreen displaying apparatus according to claim 6, wherein said fixing table comprises two parts (50a, 50b) supporting said screen part and said projecting part respectively.

## Patentansprüche

1. Mehrbildschirm-Wiedergabegerät, das eine vorgegebene Anzahl von Projektoren aufweist, mit Bildschirmteilen (1), und projizierenden Teilen (3), die Bilder auf die Bildschirmteile projizieren, wobei der Bildschirmteil (1) an dem projizierenden Teil (3) abnehmbar befestigt ist, aufweisend:
einen Rahmen (2), der zwischen dem Bildschirmteil (1) und dem projizierenden Teil (3) angeordnet ist, wobei der Rahmen mit dem Bildschirmteil (1) verbunden ist und von der Rückseite des Bildschirmteils (1) zu dem projizierenden Teil (3) hin vorspringt, und wobei der Rahmen ausgelegt ist, um den projizierenden Teil (3) in sich aufzunehmen, und größer als der äußere Umfang des projizierenden Teils (3) ist,
wobei der Rahmen (2) vier Schienenelemente (2a, 2b, 2c, 2d) aufweist, die an dem Bildschirmteil (1) befestigt sind, L-förmig im Querschnitt sind, und die Randteile des projizierenden Teils (3) teilweise bedecken; und ein Rahmenelement (2e) aufweist, um die Enden der L-förmigen Schienenelemente, die zu dem projizierenden Teil (3) hin vorspringen, miteinander zu verbinden, und
wobei der Bildschirmteil (1) an dem projizierenden Teil (3) einschiebbar befestigt ist, so daß der Bildschirmteil (1) mittels der Schienenelemente in der Richtung des projizierenden Teils (3) bewegt werden kann.

2. Mehrbildschirm-Wiedergabegerät gemäß Anspruch 1, wobei der projizierende Teil weiterhin Beinteile (4a, 4b, 4c, 4d) auf der Unterseite bei dem näher bei dem Bildschirm gelegenen Endteil und auf der Unterseite bei dem entgegengesetzten Ende aufweist.

3. Mehrbildschirm-Widergabegerät gemäß Anspruch 2, wobei der projizierende Teil weiterhin Beinauflagen (4g, 4f) auf der Oberseite bei dem näher bei dem Bildschirm gelegenen Endteil und bei dem entgegengesetzten Ende aufweist.

4. Mehrbildschirm-Widergabegerät gemäß Anspruch 1, das ein Verbindungsmittel (6) aufweist, um den projizierenden Teil mit dem Bildschirmteil zu verbinden, wenn der projizierende Teil in dem Rahmen untergebracht ist

5. Mehrbildschirm-Wiedergabegerät gemäß Anspruch 1, das Verbindungsmittel (4a und 4e, 4b und 4f) aufweist, um die oberen projizierenden Teile und die unteren projizierenden Teile miteinander zu verbinden, wenn mehrere Projektoren gestapelt werden.

6. Mehrbildschirm-Wiedergabegerät gemäß Anspruch 1, das einen beweglichen Befestigungstisch (10) unter dem untersten Projektor aufweist, wenn mehrere Projektoren gestapelt werden.

7. Mehrbildschirm-Wiedergabegerät gemäß Anspruch 6, wobei der Befestigungstisch zwei Teile (50a, 50b) aufweist, die den Bildschirmteil bzw. den projizierenden Teil tragen.

## Revendications

1. Dispositif d'affichage à plusieurs écrans comprenant un nombre prédéterminé de projecteurs comportant des parties d'écran (1) et des parties de projection (3), projetant des images sur lesdites parties d'écran, ladite partie d'écran (1) étant fixée de manière amovible sur ladite partie de projection (3), comprenant:
un cadre (2) agencé entre ladite partie d'écran (1) et ladite partie de projection (3), ledit cadre étant relié à ladite partie d'écran (1) et débordant du côté arrière de ladite partie d'écran (1) vers le côté de ladite partie de projection (3), ledit cadre étant destiné à recevoir ladite partie de projection (3) et étant plus grand que la périphérie externe de ladite partie de projection (3),
ledit cadre (2) comprenant quatre éléments de rail (2a, 2b, 2c, 2d), fixés sur la partie d'écran (1), ayant une section transversale en L et recouvrant partiellement les parties de bordure de ladite partie de projection (3);
et un élément de cadre (2e) pour raccorder les extrémités des éléments de rail en L débordant vers le côté de ladite partie de projection (3), et
ladite partie d'écran (1) étant fixée de manière rétractable sur ladite partie de projection (3), de sorte que la partie d'écran (1) peut être déplacée dans la direction de la partie de projection (3) par l'intermédiaire desdits éléments de rail.

2. Dispositif d'affichage à plusieurs écrans selon la revendication 1, dans lequel ladite partie de projection comprend en outre des parties de pied (4a, 4b, 4c, 4d) au niveau de la partie inférieure de la partie d'extrémité sur le côté de ladite partie d'écran et sur la partie inférieure de l'extrémité opposée à la partie d'écran.

3. Dispositif d'affichage à plusieurs écrans selon la revendication 2, dans lequel ladite partie de projection comprend en outre des supports de pied (4g, 4f) au niveau de la surface supérieure de la partie d'extrémité sur le côté de ladite partie d'écran et au niveau de la surface supérieure de l'extrémité opposée à la partie d'écran.

4. Dispositif d'affichage à plusieurs écrans selon la revendication 1, comprenant un moyen de raccordement (6) pour raccorder ladite partie de projection avec ladite partie d'écran lors de la réception de ladite partie de projection dans ledit cadre.

5. Dispositif d'affichage à plusieurs écrans selon la revendication 1, comprenant un moyen de raccordement (4a et 4e, 4b et 4f) pour raccorder les parties de projection supérieures et les parties de projection inférieures lors de l'empilage desdits plusieurs projecteurs.

6. Dispositif d'affichage à plusieurs écrans selon la revendication 1, comprenant une table de fixation mobile (10) au-dessous du projecteur le plus bas lors de l'empilage desdits plusieurs projecteurs.

7. Dispositif d'affichage à plusieurs écrans selon la revendication 6, dans lequel ladite table de fixation comprend deux parties (50a, 50b) supportant respectivement ladite partie d'écran et ladite partie de projection.
